# EUROPÄISCHE PATENTSCHRIFT

(11) **EP 0 621 119 B1**
(45) Veröffentlichungstag und Bekanntmachung des Hinweises auf die Patenterteilung: **16.07.1997**
(21) Anmeldenummer: 94106354.7
(22) Anmeldetag: 22.04.1994
(51) Int. Cl.: B29C 47/00, B29C 69/00

(54) **Verfahren zur Herstellung von endlichen Profilsträngen**
Method of producing profiles of definite length
Méthode de fabrication de profiles de longueur définie

(30) Priorität: 22.04.1993 DE 4313194
(43) Veröffentlichungstag der Anmeldung: 26.10.1994
(73) Patentinhaber: METZELER Automotive Profiles GmbH, D-88131 Lindau (DE)
(72) Erfinder: Kranz, Jürgen, D-88131 Lindau/Bodolz (DE)
(74) Vertreter: Preissner, Nicolaus, Dipl.-Ing.

(56) Entgegenhaltungen:
- EP-A- 0 325 828
- EP-A- 0 427 378
- DE-A- 1 729 116
- PATENT ABSTRACTS OF JAPAN vol. 8, no. 180 (M-318)(1617) 18. August 1984 & JP-A-59 070 528 (NISHIKAWA GOMU KOGYO K.K.)

## Beschreibung

Die Erfindung bezieht sich auf ein Verfahren zur Herstellung von endlichen Profilsträngen aus elastomerem Material mit mindestens einer abragenden Dichtlippe unterschiedlicher Kontur über die Profillänge, wobei die Dichtlippe mit maximalem Querschnitt extrudiert und anschließend auf dem vorgegebenen Konturverlauf reduziert wird.

Es ist bekannt, Profilstränge mit abragenden Dichtlippen unterschiedlicher Länge über den Bereich des Profilstranges herzustellen. Dazu ist es aus der EP-B-0081093 bekannt, den Profilquerschnitt des Mundstückes am Extruder zeitweise und über Teilbereiche mit einer Blende abzudecken, so daß dann nur ein Profil der gewünschten Konfiguration extrudiert wird.

Darüberhinaus ist es aus der DE-U-8219073.9 bekannt, nach der Extrusion überstehende Dichtlippenbereiche mit einem quer zum Profil verschieblichen Schneidmesser abzutrennen, so daß auch hier die gewünschte Konfiguration erhalten wird.

Nachteilig bei einer solchen Anordnung ist, daß hierbei durch das Schneidmesser ein seitlicher Druck auf das noch unvulkanisierte Profil ausgeübt wird, so daß dadurch eine zusätzliche Verformung der restlichen Profilbereiche erfolgen kann. Darüberhinaus läßt die Genauigkeit der Schnittkante bei einer solchen Anordnung zu wünschen übrig.

Der vorliegenden Erfindung liegt demgegenüber die Aufgabe zugrunde, ein Verfahren zur Herstellung derartiger Profilstränge mit unterschiedlich langen Dichtlippen zu schaffen, bei dem keine zusätzliche Verformung des unvulkanisierten Profiles auftritt und bei dem insbesondere eine sehr saubere Schnittkante erhalten wird.

Zur Lösung dieser Aufgabe ist erfindungsgemäß vorgesehen, daß mittels zwei, seitlich auf die Dichtlipppe einwirkenden Nadeln, die in ihrer Eingriffshöhe von einer Kurvenscheibe gesteuert werden, der vorgegebene Konturverlauf in den entsprechenden Profilbereich rillenförmig eingeschnitten und der überstehende Profilabschnitt nach der Vulkanisation abgetrennt wird.

Damit kann ein exakt geführter Teilschnitt von beiden Seiten der Dichtlippe in diese gelegt werden, wobei dann der überstehende Bereich nach der Vulkanisation einfach abgetrennt werden kann.

Darüberhinaus ist es möglich, daß mittels hervorstehender Indexer-Nopppen auf der Kurvenscheibe vertikale Einschnitte im Profil entsprechend vorgegebener Länge eines Profilstranges angebracht werden und anschließend der fortlaufende Profilstrang an diesen Einschnitten in endliche Profilstränge durchtrennt wird.

In Weiterbildung der Erfindung ist bei einer Vorrichtung zur Durchführung dieses Verfahrens erfindungsgemäß vorgesehen, daß in einem vor dem Mundstück des Extruders vertikal verschiebbar angeordneten Variator zwei schräg zueinander verlaufende Hartmetallnadeln angeordnet sind und daß der Variator federbeaufschlagt über einen vertikalen Stößel mit einer die vorgegebene Kontur des entsprechenden Profilbereiches wiedergebenden Kurvenscheibe in Wirkverbindung steht.

Dabei ist es zweckmäßig, wenn der Variator unmittelbar am Mundstück des Extruders befestigt ist.

Die Drehzahl der Kurvenscheibe kann dabei in Abhängigkeit von einem die Abzugsgeschwindigkeit des extrudierten Profils ermittelnden Meßrades steuerbar sein.

In weiterer Ausgestaltung ist es von Vorteil, wenn dem Variator eine Vulkanisationsstrecke und anschließend zwei Abreißrollen zur Abtrennung des durch die Hartmetallnadeln eingeschnittenen und überstehenden Profilabschnittes nachgeschaltet sind.

Dabei sollte ein Umlauf der Kurvenscheibe der Länge eines endlichen Profilstranges entsprechen und die Exenterscheibe an ihrem Umfang eine vorstehende Indexer-Noppe aufweisen, deren entsprechende Einprägungen am Profilstrang von einer den Abreißrollen nachgeschalteten Lichtschranke lesbar sein, dessen Signal zur Ansteuerung einer anschließenden Ablängvorrichtung auswertbar ist.

Anhand einer schematischen Zeichnung sind Aufbau und Funktionsweise eines Ausführungsbeispieles nach der Erfindung näher erläutert. Dabei zeigen:
- Figur 1: eine Aufsicht auf das Extrudermundstück mit davor angeordnetem Variator und Kurvenscheibe,
- Figur 2: einen Blick von oben auf diese Vorrichtung,
- Figur 3: die schematische Gesamtdarstellung der Behandlungsstrecke für das Profil,
- Figur 4: der Querschnitt eines möglichen Profiles,
- Figur 5: eine schematische Darstellung der Wirkungsweise der Schneidnadeln und
- Figur 6: eine schematisierte Seitenansicht eines Abschnittes des endlosen Profilstranges.

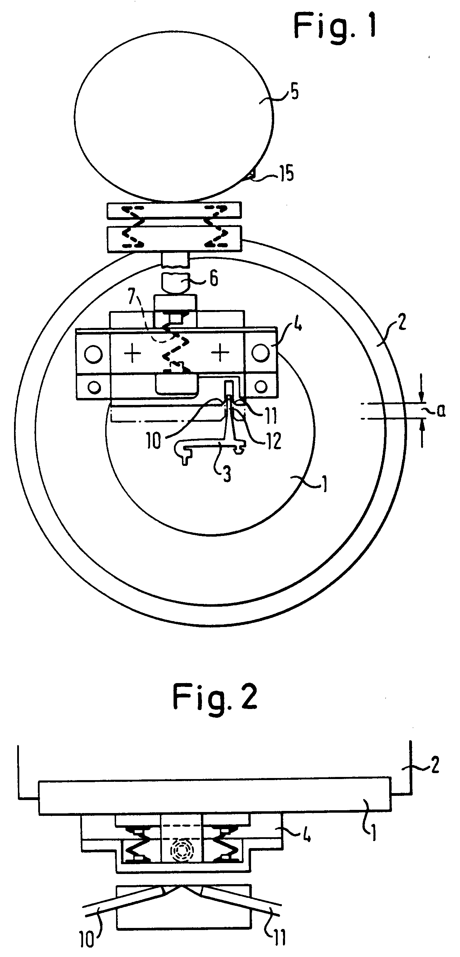

Wie man aus Figur 1 und 2 ersieht, ist unmittelbar vor dem Mundstück 1 des Extruders 2, mit dem ein Profil 3 des beispielsweise angegebenen Querschnittes extrudiert werden soll, ein Variator 4 angeordnet, dessen beweglicher Teil durch eine rotierende Kurvenscheibe 5 und einen zwischengeschalteten Stößel 6 gegen den Widerstand einer Feder 7 vertikal verschiebbar ist.

Wie man aus Figur 1 und 2 ersieht, weist der Variator zwei zueinander schräg gestellte Stahlnadeln 10 und 11 auf, deren Spitzen seitlich auf die nach oben abragende Dichtlippe 12 des Profiles 3 einwirken und dort entsprechende Einschnitte anbringen, ohne die Dichtlippe ganz zu durchtrennen.

Wie man aus Figur 1 ersieht, kann entsprechend der Exentrizität der Kurvenscheibe der Variator 4 und damit die Nadeln 10 und 11 um die angegebene Strecke a in seiner Höhe variiert werden, um damit entsprechende Einschnitte veränderlicher Höhe an der Dichtlippe 12 anzubringen.

Darüberhinaus weist die Kurvenscheibe 5 auf ihrem Umfang eine vorstehende Indexer-Noppe 15 auf, mit der nach jedem Umlauf der Kurvenscheibe 5, der der Länge eines abzutrennenden Profilstranges entspricht, eine vertikale Einkerbung in der Dichtlippe 12 erfolgt, an welcher Stelle in noch zu erläuternder Weise der fortlaufende Profilstrang in einzelne endliche Stränge unterteilt wird.

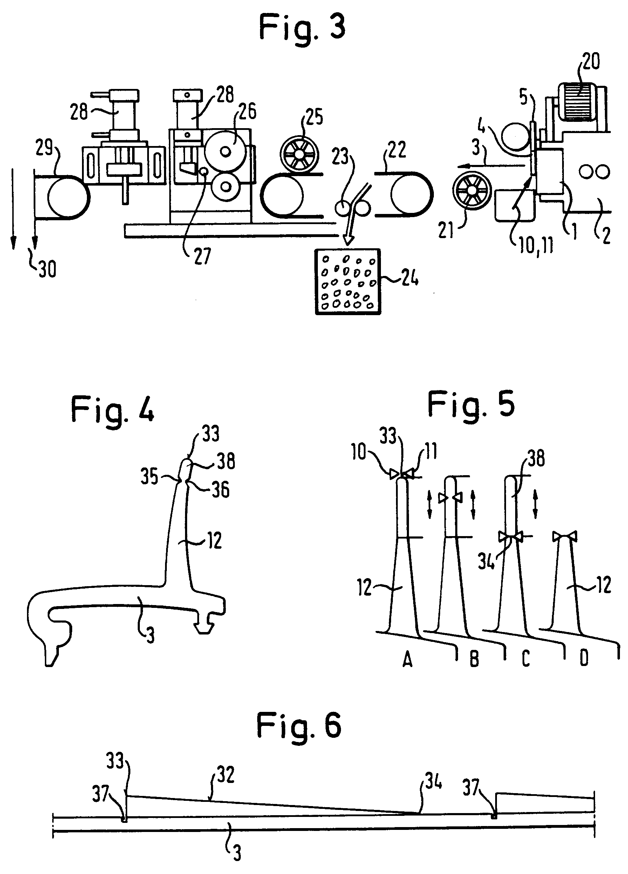

Dazu ist in Figur 3 der schematische Aufbau der gesamten Bearbeitungstrecke dargestellt. Aus dem Mundstück 1 des Extruders 2 wird das schematisch angedeutete Profil 3 extrudiert. Am Mundstück 1 sind der Variator 4 und die Kurvenscheibe 5 angeordnet, welch letztere von einem Motor 20 angetrieben wird. Vom nachgeschalteten Meßrad 21 werden die notwendigen elektrischen Signale für die Drehgeschwindigkeit der Kurvenscheibe in Abhängigkeit von der Abzugsgeschwindigkeit des Profiles 3 gegeben.

Diesem Teil der Bearbeitungsstrecke ist die Vulkanisationsstrecke 22 nachgeschaltet, an derem Ende über Abreißrollen 23 der durch die Nadeln 10 und 11 vorgeschnittene Profilbereich 38 abgetrennt und in einem Abfallbehälter 24 gesammelt wird.

Das weiter nachgeschaltete Meßrad 25 ermittelt den Durchhang des Profilstranges für die nachfolgend erläuterte Ablängvorrichtung.

Hierfür wird das Profil 3 zunächst von den Einschubrollen 26 erfaßt und einer Lichtschranke 27 zugeführt, in der die vom Indexer 15 gesetzten Einschnitte erfaßt und in entsprechende Befehle an die nachfolgende eigentliche Ablängvorrichtung 28, die anschließend nochmals in Vorderansicht dargestellt ist, gibt, um damit den endlosen Profilstrang 3 jeweils im Indexerbereich in endliche Profilstränge aufzutrennen, die anschließend über ein Band 29 einem Sammelbehälter 30 zugeführt werden.

In Figur 4 ist der Querschnitt eines beispielsweise herzustellenden Profiles 3 mit einer abragenden Dichtlippe 12 gezeigt. Diese Dichtlippe 12 soll dabei über ihre Länge den in Figur 6 stark überhöht gezeigten Oberkantenverlauf 32 aufweisen. Dazu werden entsprechend der schematischen Darstellung in Figur 5 die Nadeln 10 und 11 von der extrudierten Oberkante 33 der Dichtlippe 12 - entsprechend der Konfiguration der Exenterscheibe 5 - über eine Zwischenstellung nach Figur 5B in die untere Endstellung 34 entsprechend Figur 5C gefahren und schneiden dabei beidseitig endsprechend der Neigung des Oberkantenverlaufes 32 beidseitig in die Dichtlippe 12 entsprechende Rillen 35 und 36 ein, die später die Abreißkanten in den Abreißrollen 23 bilden.

Figur 5D zeigt dann den weiteren Verlauf des Profiles mit vorgegeben gekürzter Dichtlippe 12.

In der schematischen Darstellung nach Figur 6 sind darüberhinaus noch die von der Indexer-Noppe 15 gesetzten Einschnitte 37 zu erkennen, an denen dann der endlose Profilstrang in einzelne endliche Profilstränge abgeteilt wird.

Mit dem beschriebenen Verfahren und der entsprechenden Vorrichtung ist es also möglich, einen Profilstrang mit über seine Länge unterschiedlicher Höhe der Dichtlippe herzustellen. Wesentlich dabei ist, daß mit dem beschriebenen Verfahren eine von beiden Seiten gebrochene Profilkante geschaffen werden kann, da derartige gebrochene Kanten eine sehr gute Dichtung gegen Lacke und Kunststoffe und gute Gleiteigenschaften aufweisen, ohne daß dabei ein Abrieb auftritt.

Das im Querschnitt dargestellte Profil dient im vorliegenden Fall zur Abdichtung eines Kraftfahrzeug-Türrahmen gegen das Dach. Im Rahmen der Erfindung sind jedoch auch andere Gestaltungen und Anwendungen entsprechend zu behandelnder Profile denkbar.

## Patentansprüche

1. Verfahren zur Herstellung von endlichen Profilsträngen (3) aus elastomerem Material mit mindestens einer abragenden Dichtlippe (12) unterschiedlicher Kontur (32) über die Profillänge, wobei die Dichtlippe (12) mit maximalem Querschnitt extrudiert und anschließend auf dem vorgegebenen Konturverlauf (32) reduziert wird, dadurch gekennzeichnet, daß mittels zwei, seitlich auf die Dichtlippe (12) einwirkenden Nadeln (10, 11), die in ihrer Eingriffshöhe (a) von einer Kurvenscheibe (5) gesteuert werden, der vorgegebene Konturverlauf (32) in den entsprechenden Profilbereich (12) rillenförmig eingeschnitten und der überstehende Profilabschnitt (38) nach der Vulkanisation abgetrennt wird.

2. Verfahren nach Anspruch 1, dadurch gekennzeichnet, daß mittels hervorstehender Indexer-Noppen (15) auf der Kurvenscheibe (5) vertikale Einschnitte (37) im Profil (3) entsprechend vorgegebener Länge eines Profilstranges (3) angebracht werden und anschließend der fortlaufende Profilstrang (3) an diesen Einschnitten (37) in endliche Profilstränge durchtrennt wird.

3. Vorrichtung zur Herstellung von endlichen Profilsträngen (3) aus elastomerem Material mit mindestens einer abragenden Dichtlippe (12) unterschiedlicher Kontur (32) über die Profillänge, insbesondere nach dem Verfahren gemäß Anspruch 1, mit einem Extruder (2) und Mitteln zum Reduzieren der Dichtlippe (12) auf den vorgegebenen Konturverlauf (32), dadurch gekennzeichnet, daß in einem vor dem Mundstück (1) des Extruders (2) vertikal verschiebbar angeordneten Variator (4) zwei schräg zueinander verlaufende Hartmetallnadeln (10, 11) angeordnet sind und daß der Variator (4) federbeaufschlagt über einen vertikalen Stößel (6) mit einer, die vorgegebene Kontur (32) des entsprechenden Profilbereichs (12) wiedergebenden Kurvenscheibe (5) in Wirkverbindung steht.

4. Vorrichtung nach Anspruch 3, dadurch gekennzeichnet, daß der Variator (4) unmittelbar am Mundstück (1) des Extruders (2) befestigt ist.

5. Vorrichtung nach Anspruch 3, dadurch gekennzeichnet, daß die Drehzahl der Kurvenscheibe (5) in Abhängigkeit von einem die Abzugsgeschwindigkeit des extrudierten Profiles (3) ermittelnden Meßrades (21) steuerbar ist.

6. Vorrichtung nach Anspruch 3, dadurch gekennzeichnet, daß dem Variator (4) eine Vulkanisationsstrecke (22) und anschließend zwei Abreißrollen (23) zur Abtrennung des durch die Hartmetallnadeln (10, 11) eingeschnittenen und überstehenden Profilabschnittes (38) nachgeschaltet sind.

7. Vorrichtung nach Anspruch 3, dadurch gekennzeichnet, daß ein Umlauf der Kurvenscheibe (5) der Länge eines endlichen Profilstranges entspricht und daß die Kurvenscheibe (5) an ihrem Umfang eine vorstehende Indexer-Noppe (15) aufweist, deren entsprechende Einprägungen (37) am Profilstrang (3) von einer den Abreißrollen (23) nachgeschalteten Lichtschranke (27) lesbar sind, dessen Signal zur Ansteuerung einer anschließenden Ablängvorrichtung (28) auswertbar ist.

## Claims

1. A method of producing profiles (3) of definite length from an elastomer material comprising at least one protruding sealing lip (12) of differing contour (32) over the profile length, said sealing lip (12) being extruded with a maximum cross-section and subsequently reduced to the predetermined contour profile (32), characterized in that by means of two needles (10, 11) affecting said sealing lip (12) on the side, which are controlled in their engaging height (a) by a cam disk (5), said given contour profile (32) in the corresponding profile region (12) is nicked groove-shaped and the excess profile section (38) is parted off after the following vulcanization.

2. The method as set forth in claim 1, characterized in that by means of protruding indexer pimples (15) on said cam disk (5) vertical nicks (37) of a corresponding predetermined length of a profile (3) are applied in said profile (3) and subsequently the continuous profile (3) is parted at said nicks (37) into profiles of definite length.

3. An apparatus for producing profiles (3) of definite length from an elastomer material comprising at least one protruding sealing lip (12) of different contour (32) more particularly in accordance with the method as set forth in claim 1, comprising an extruder (2) and means for reducing said sealing lip (12) to said predetermined contour profile (32), characterized in that in a variator (4) arranged vertically shiftable upstream of the orifice (1) of said extruder (2) two hard metal needles (10, 11) are arranged, oriented inclined to each other and in that said variator (4) is actively connected spring-loaded via a vertical follower (6) to a cam disk (5) reproducing said predetermined contour (32) of the corresponding profile region (12).

4. The apparatus as set forth in claim 3, characterized in that said variator (4) is directly secured to said orifice (1) of said extruder (2).

5. The apparatus as set forth in claim 3, characterized in that the rotary speed of said cam disk (5) is controllable as a function of a measuring wheel (21) for establishing the dispensing rate of said extruded profile (3).

6. The apparatus as set forth in claim 3, characterized in that said variator (4) is followed by a vulcanization section (22) and subsequently two parting rolls (23) for parting said protruding profile section (38) nicked by said hard metal needles (10, 11).

7. The apparatus as set forth in claim 3, characterized in that one revolution of said cam disk (5) corresponds to the length of one profile of definite length and in that said cam disk (5) comprises on its circumference a protruding indexer pimple (15), the corresponding impressions (37) of which on said profile (3) are readable downstream of said parting rolls (23) by a light barrier (27), the signal of which is evaluatable for signal control of a subsequent means for cutting to length.

## Revendications

1. Procédé pour fabriquer des bandes profilées finies (3) en matériau élastomère présentant an moins une lèvre d'étanchéité en saillie (12) de contour différent (32) sur la longueur du profilé, dans lequel la lèvre d'étanchéité (12) est extrudée avec la section maximum et est ensuite réduite au tracé de contour prédéterminé (32), caractérisé en ce que l'on entaille le tracé de contour prédéterminé (32) dans les zones correspondantes du profilé (12), sous fontie de rainures au moyen de deux aiguilles (10, 11) qui agissent latéralement sur la lèvre d'étanchéité (12) et qui sont commandées quant à leur hauteur d'attaque (a) par un disque a came (5), et en ce que le tronçon de profilé qui dépasse (38) est séparé après la vulcanisation.

2. Procédé selon la revendication 1, caractérisé en ce que l'on ménage des entailles verticales, au moyen de boutons d'indexation en saillie (15) sur le disque à came (5), dans le profilé selon des longueurs prédéterminées d'une bande de profilé, et en ce que l'on sépare ensuite la bande profilée continue (3) au niveau de ces entailles (37) pour fontier des bandes de profilé finies.

3. Appareil pour produire des bandes de profilé finies (3) en matériau élastomère qui présentent au moins une lèvre d'étanchéité en saillie (12) de contour différent (32) sur la longueur du profilé, en particulier d'après le procédé de la revendication 1, comprenant une extrudeuse (2) et des moyens pour réduire la lèvre d'étanchéité (12) au tracé de contour prédéterminé (32), caractérisé en ce que deux aiguilles métalliques dures (10, 11) disposées en oblique l'une par rapport à l'autre sont agencées dans un variateur (4) agencé en déplacement vertical devant la pièce d'embouchure (11) de l'extrudeuse (2), et en ce que le variateur (4) est en liaison active sous la sollicitation d'un ressort avec un disque à came (5) qui reproduit le contour prédéterminé (32) de la zone de profilé correspondante (12), par l'intermédiaire d'un poinçon vertical (6).

4. Appareil selon la revendication 3, caractérisé en ce que le variateur (4) est fixé directement à la pièce d'embouchure (1) de l'extrudeuse (2).

5. Appareil selon la revendication 3, caractérisé en ce que la vitesse de rotation du disque à came (5) est susceptible d'être commandée en dépendance d'une roue de mesure (21) qui détermine la vitesse d'extrusion du profilé extrudé (3).

6. Appareil selon la revendication 3, caractérisé en ce qu'un banc de vulcanisation (22) et ensuite deux rouleaux d'attachement (23) sont agencés en aval du variateur (4), pour séparer le tronçon de profilé en dépassement (38), entaillé par les aiguilles métalliques dures (10, 11).

7. Appareil selon la revendication 3, caractérisé en ce qu'une rotation du disque à came (5) correspond à la longueur d'une bande de profilé finie, et en ce que le disque à came (5) présente à sa périphérie un bouton d'indexation en saillie (15) dont les empreintes correspondantes (37) sur la bande profilée (3) peuvent être lues par une barrière lumineuse (27) montée en aval de l'un des galets d'arrachement (23), dont le signal est exploité pour la commande d'un dispositif de mise à longueur (28), situé en aval.
